# EUROPEAN PATENT APPLICATION

(11) **EP 4 001 582 A1**
(43) Date of publication of application: **25.05.2022**
(21) Application number: 21210271.9
(22) Date of filing: 24.11.2021
(51) Int. Cl.: E06B 9/42, B60R 21/08, B64D 11/06, B64D 11/00

(54) **SYSTEMS AND METHODS FOR REDUCING SPREAD OF CONTAGION IN PASSENGER VEHICLES**

(30) Priority: 24.11.2020 US 202063117628 P
(71) Applicant: B/E Aerospace, Inc., Winston-Salem, NC 27105 (US)
(72) Inventor: ATEN, Michael, San Diego, CA, 92129 (US)
(74) Representative: Dehns

(57) **Abstract**

In accordance with at least one aspect of this disclosure, a system (100) for preventing spread of contagion in a passenger vehicle (10) includes a barrier housing (102) configured to mount to a first surface in the passenger vehicle, a retractable barrier (106)) housed in the barrier housing configured to move between a deployed position and a retracted position, a retraction mechanism (110) operatively connected to the retractable barrier within the barrier housing configured to bias the retractable barrier to the retracted position, and a barrier retainer (112) configured to mount to a second surface in the passenger vehicle opposite the first surface to retain the retractable barrier in the deployed position. In certain embodiments, the retractable barrier can include a free end (108) configured to be pulled by a user.

## Description

### CROSS-REFERENCE TO RELATED APPLICATIONS

This application claims priority to and the benefit of U.S. Provisional Application No. 63/117,628, filed November 24, 2020.

### TECHNICAL FIELD

The present disclosure relates to reducing the spread of contagion, e.g., in passenger vehicles.

### BACKGROUND

The COVID-19 pandemic has underscored the importance of pathogen reduction aboard high occupancy passenger vehicles, such as aircraft, busses, and trains. Effective mitigation of pathogen spread onboard such vehicles is an important way to reduce risk of infection to passengers.

There remains a need in the art for more efficient systems and methods to reduce or prevent the spread of contagion between passengers. This disclosure provides a solution for this need.

### SUMMARY

In accordance with at least one aspect of this disclosure, a system for preventing spread of contagion in a passenger vehicle includes: a barrier housing configured to mount to a first surface in the passenger vehicle, a retractable barrier housed in the barrier housing configured to move between a deployed position and a retracted position, a retraction mechanism operatively connected to the retractable barrier within the barrier housing configured to bias the retractable barrier to the retracted position, and a barrier retainer configured to mount to a second surface in the passenger vehicle opposite the first surface to retain the retractable barrier in the deployed position. In certain embodiments, the retractable barrier can include a free end configured to be pulled by a user. In embodiments, the barrier retainer can include at least one of a magnetic retainer, a spring-loaded retainer, a clip retainer, a knob retainer, a recess retainer, and/or a lever retainer, where the free end of the retractable barrier can be shaped to mate with the barrier retainer.

In certain embodiments, the first surface can be an overhead compartment of a passenger service unit, and the second surface can be an arm rest between respective passenger service units. In certain such embodiments, the barrier housing can include at least one of a reading light, a switch to activate the reading light, and/or a service call button. In certain embodiments, the first surface can be an arm rest between respective passenger service units, and the second surface can be an overhead compartment of a passenger service unit. In certain embodiments, the first surface can be a seat back of a forward facing seat and the second surface can be an arm rest between respective passenger service units. In certain embodiments, the first surface can be an arm rest between respective passenger service units and the second surface can be a seat back of a forward facing seat. In certain embodiments, the first surface can include an overhead compartment of a passenger service unit and the second surface can include a seat back of a forward facing seat configured to provide a barrier between passenger rows. In certain embodiments, the barrier housing can be mounted to or integral with the first surface, and the barrier retainer can be mounted to or integral with the second surface.

In certain embodiments, the retractable barrier can be made of a material configured to be torn in an emergency event. In certain embodiments, the retractable barrier can be made of a material configured to be sanitized with chemical cleaners. In certain embodiments, the retractable barrier can configured to provide privacy between passenger service units. In certain embodiments, the retractable barrier can be transparent, translucent, and/or opaque.

In accordance with at least one aspect of this disclosure, a passenger vehicle can include a plurality of passenger service units arranged in rows along an aisle of the passenger vehicle and one or more systems for preventing spread of contagion mounted between each passenger unit. In embodiments, the one or more systems for preventing spread of contagion can include any one or all, or any combination of the features as described herein. In certain embodiments, the passenger vehicle can include an aircraft, a bus, or a train.

In accordance with at least one aspect of this disclosure, a method for reducing spread of contagion in a passenger vehicle, can include installing one or more systems for preventing spread of contagion between one or more passenger units, the one or more systems for preventing spread of contagion being as described herein. In certain embodiments, installing can include retrofitting an existing passenger vehicle with the one or more systems for preventing spread of contagion. In certain embodiments, installing can include manufacturing the passenger vehicle to include the one or more systems for preventing spread of contagion integral with passenger service unit architecture.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1a is a schematic perspective view of a passenger vehicle in accordance with this disclosure, showing a row of passenger units in the passenger vehicle and a system for preventing spread of contagion in a retracted position;
Fig. 1b is a schematic perspective view of the passenger vehicle of Fig. 1, showing the system for preventing spread of contagion in a deployed position;
Fig. 2 is a schematic perspective view of the system for preventing spread of contagion begin deployed by a user;
Fig. 3 is a schematic perspective view of an embodiment of the system for preventing spread of contagion, showing a barrier retainer;
Fig. 4 is a schematic perspective view of an embodiment of the system for preventing spread of contagion, showing another barrier retainer;
Fig. 5 is a schematic perspective view of an embodiment of the system for preventing spread of contagion, showing another barrier retainer;
Fig. 6a is a schematic perspective view of an embodiment of the system for preventing spread of contagion, showing another barrier retainer;
Fig. 6b is a schematic front end cross sectional view of the embodiment of the system of Fig. 6a;
Fig. 7a is a schematic front end cross sectional view of an embodiment of the system for preventing spread of contagion, showing another barrier retainer;
Fig. 7b is a schematic front end cross sectional view of the embodiment of the system of Fig. 7a, showing engagement of a retractable barrier with the barrier retainer;
Fig. 7c is a schematic front end cross sectional view of the embodiment of the system of Fig. 7a, showing engagement of the retractable barrier with the barrier retainer;
Fig. 8a is a schematic front end cross sectional view of an embodiment of the system for preventing spread of contagion, showing another barrier retainer and
Fig. 8b is a schematic front end cross sectional view of the embodiment of the system of Fig 8a, showing engagement of a retractable barrier with the barrier retainer.

### DETAILED DESCRIPTION

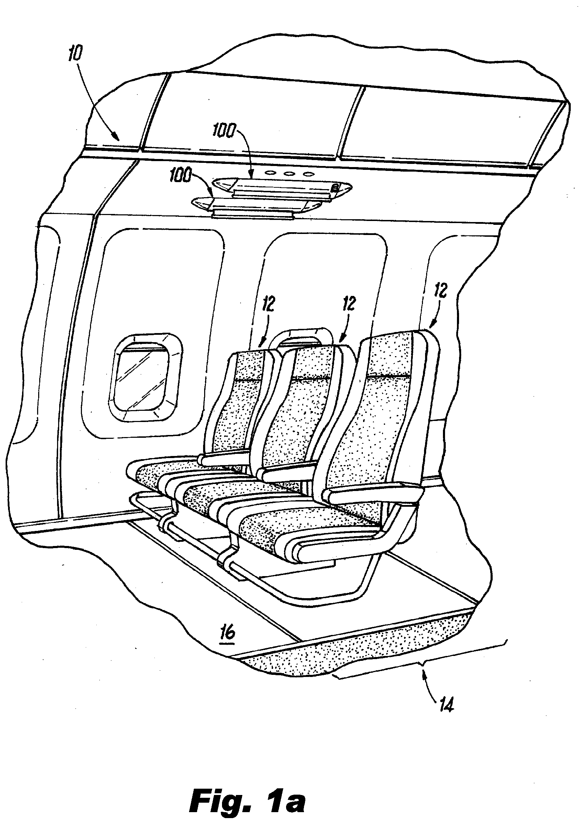

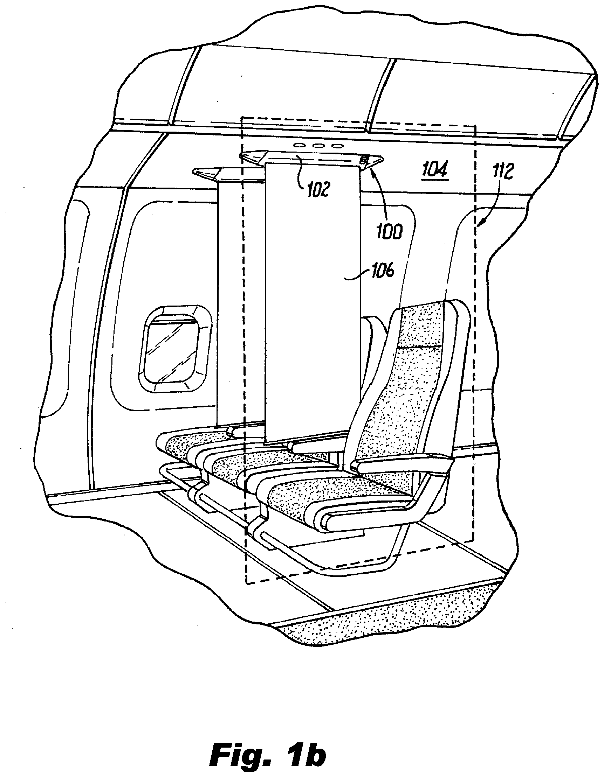

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1a and is designated generally by reference character 100. Other embodiments and/or aspects of this disclosure are shown in Figs. 1b-3f. Certain embodiments described herein can be used to mitigate the spread of pathogens between users in an enclosed space, for example passengers in a passenger vehicle.

Referring to Figs. 1a-2, in accordance with at least one aspect of this disclosure, a passenger vehicle 10 (e.g., a high occupancy vehicle such as an aircraft, a bus, a train, or the like) can include a plurality of passenger service units 12 arranged in rows 14 along an aisle 16 of the passenger vehicle 10. Any other suitable arrangement of passenger units 12 (e.g., offset or staggering units) is contemplated herein. One or more systems 100 for preventing spread of contagion can be mounted between each passenger unit 12, for example as shown in Fig. 1a and 1b.

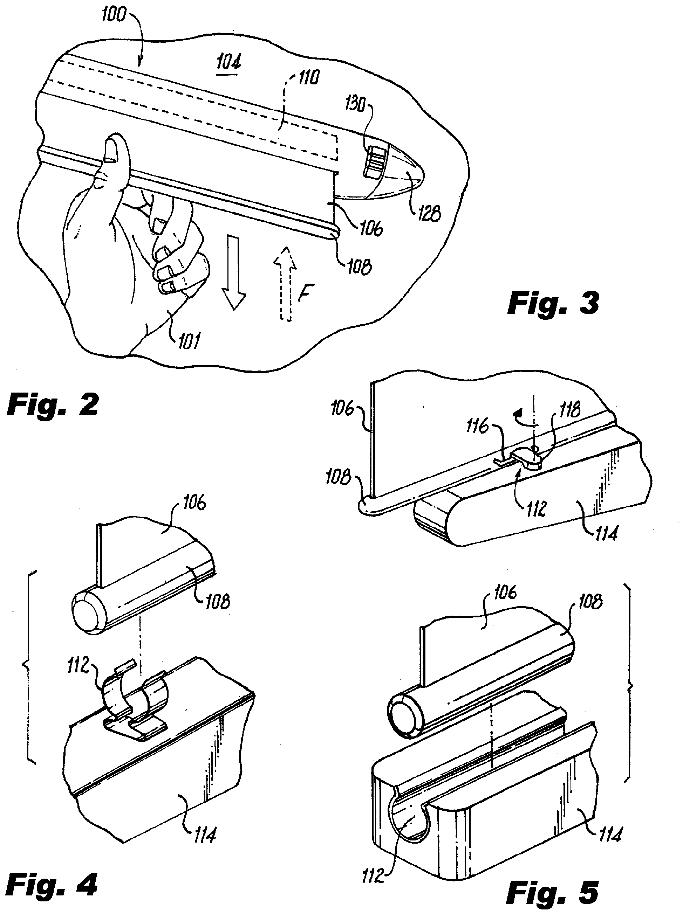

Referring to Fig. 2, the one or more systems 100 for preventing spread of contagion can include a barrier housing 102 configured to be included in (e.g., disposed on or integral with) a first surface 104 in the passenger vehicle 10. A retractable barrier 106 can be housed within in the barrier housing 102, configured to move between a retracted position (e.g., as shown in Fig. 1a) and a deployed position (e.g., as shown in Fig. 1b). In the retracted position, the retractable barrier 106 can be nearly entirely within the housing 102, with the exception of a free end 108 that remains external to the housing 102 in the retracted position. In the deployed position, the retractable barrier 106 can be pulled from the housing 102 to create a pathogen barrier between passenger units 12 (e.g., as shown in Fig. 1b). A retraction mechanism 110 can be included in the barrier housing 102 operatively connected to the retractable barrier 106, configured to bias the retractable barrier 106 to the retracted position. The retraction mechanism 110 can include any suitable biasing member, for example a spring and roller, that is configured to automatically retract the barrier 106 when the barrier is not held in place either by a user 101 or a barrier retainer 112.

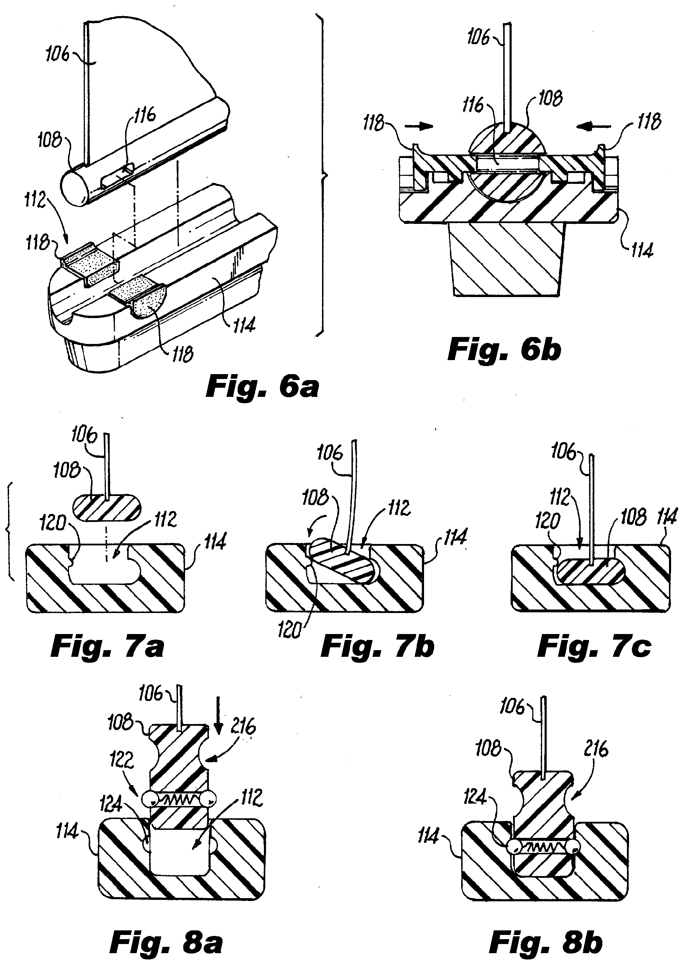

Turning now to Figs. 3-8b, the barrier retainer 112 can be configured included in (e.g., disposed on or integral with) a second surface 114 in the passenger vehicle 10 opposite the first surface 104 to retain the retractable barrier 106 in the deployed position, for example using the free end 108. The free end 108 can be shaped so as to be to be pulled by the user 101, against the force F of the retraction mechanism 110. The barrier retainer 102 can include at least one of a magnetic retainer, a spring-loaded retainer, a clip retainer, a knob retainer, a recess retainer, and/or a lever retainer, where the free end 108 of the retractable barrier 106 can be shaped complimentary to the barrier retainer 112 to mate with the barrier retainer 112. For example, as shown in Figs. 4 and 5, the free end 108 can have a circular cross section, configured to mate with an external (Fig. 4) or internal (Fig. 5) c-clip or a c-shaped groove in the second surface 114. As shown in Figs. 3, 6a, and 6b, the free end 108 may contain recesses 116 configured to accept protrusions or knobs 118 of the barrier retainer 112. As shown in Figs. 7a-7c, the free end 108 may have an elliptical cross section configured to seat within an elliptical groove in the barrier retainer, and can be held in place by a spring or protrusion 120. As shown in Figs. 8a-8b, the free end 108 may contain a ball spring 122 configured to seat within depressions 124 of the barrier retainer 112. The free end 108 may also be shaped to offer better grip to a user when pulling, for example, the free end may include finger depressions 126 having a rough surface.

In certain embodiments, the first surface 104 can be an overhead compartment of the passenger service unit 112, and the second surface 114 can be an arm rest between respective passenger service units 12, as shown. In this example, the retractable barrier 106 can be pulled downward from the overhead compartment to latch to the barrier retainer 112 on or in the corresponding armrest. Additionally, when the barrier housing 102 is included overhead, the barrier housing 102 can include at least one of a reading light 128, a switch 130 to activate the reading light 128, and/or a service call button.

In certain embodiments, the first surface 104 can instead be the arm rest and the second surface 114 can be the overhead compartment, where the retractable barrier 106 is pulled upward, from the arm rest to latch to the barrier retainer 112 on or in the corresponding compartment. In certain embodiments, the first surface 104 can be a seat back of a forward facing seat and the second surface 114 can be some portion of the arm rest, where the barrier 106 is pulled from the forward facing seat, toward the user 101 to latch to the barrier retainer 112 on or in the corresponding arm rest. In certain embodiments, the reverse can be true, where the first surface 104 can be the arm rest and the second surface 114 can be the seat back of the forward facing seat so that the barrier 106 is pulled from the barrier housing 102 on or in the arm rest, towards the seatback of the forward facing seat, to latch to the barrier retainer 112 on or in the forward facing seat. In certain embodiments, the first surface 104 can be the overhead compartment and the second surface 114 can be the seat back of a forward facing seat, configured to provide a barrier between passenger rows 14. In certain embodiments, the reverse can be true. In this embodiment, the retractable barrier 106 can be deployed in a similar manner to that shown in the Figs. 1a-2 and described herein.

In certain embodiments, the retractable barrier 106 can be made to be easily retracted or torn in an emergency event. For example, the barrier retainer 112 can be configured as a quick release where little force is required to release the free end 108. In certain embodiments, the retractable barrier 106 itself can be made of a material configured to be easily torn if in the deployed position during an emergency event, or the barrier may include a perforation at one end to facilitate tearing in an emergency event. In certain embodiments, the retractable barrier 106 can be made of a material configured to be sanitized with chemical cleaners (e.g., conventional sanitizing cleaners and/or heavy duty sanitizing cleaners). In certain embodiments, the retractable barrier 106 can be configured to provide privacy between passenger service units 12, for example the retractable barrier 106 can be made of a transparent, translucent, and/or opaque material. In certain embodiments, the barrier 106 may include a combination of transparent, translucent, and/or opaque finishes.

In accordance with at least one aspect of this disclosure, a method for reducing spread of contagion in a passenger vehicle (e.g., vehicle 10), can include installing one or more systems for preventing spread of contagion (e.g., system 100) between one or more passenger units, the one or more systems for preventing spread of contagion including any suitable combination of features as described herein. In certain embodiments, installing can include retrofitting an existing passenger vehicle with the one or more systems for preventing spread of contagion, for example mounting the barrier housing and barrier retainers to the existing architecture. In certain embodiments, installing can include manufacturing the passenger vehicle to include the one or more systems for preventing spread of contagion integral with passenger service unit architecture.

In embodiments, passenger cabin screens (e.g., barrier 106) can be included in a passenger jet, for example, to prevent spread of contagion. Retractable screens can be included between passenger jet seats to act as a barrier between passengers to help prevent and/or mitigate the spread of contagions in-flight. In embodiments, the screens can be made of a flexible fabric material that is easily cleaned/sanitized. In embodiments, the housing can include a spring retraction allows screens to be raised rapidly to facilitate emergency evacuation of the aircraft. In embodiments, the flexible screens could also be pushed out of way easily to facilitate emergency evacuation. For example, the material of the retractable barrier can include any of a range of flexible or elastomeric sheet plastics with properties that meet regulatory requirements for flammability and toxicity in a fire. In certain embodiments, the material could also be woven with polymer threading, for instance consistent with passenger seat fabrics that meet regulatory requirements for flammability and toxicity in a fire. Any other suitable fabric or material is contemplated herein.

In embodiments, the retracted screens are stored in a container that can feature a reading light and reading light switch. When deployed, the screens can attach to an arm rest with simple catch. In embodiments, the screens can be used for privacy as well as contagion inhibiting. The screens can be made of FAA certification compliant materials, can be retrofitted or added in newly constructed aircraft, can be made to tear easily for emergency purposes. In embodiments, any suitable type of latch or catch can be used, e.g., magnetic, spring-loaded clip, knob, lever, or the like, as shown and described.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the apparatus and methods of the subject disclosure have been shown and described, those skilled in the art will readily appreciate that changes and/or modifications may be made thereto without departing from the scope of the invention as defined by the claims.

## Claims

1. A system for preventing spread of contagion in a passenger vehicle (10), comprising:
a barrier housing (102) configured to mount to a first surface (104) in the passenger vehicle;
a retractable barrier (106) housed in the barrier housing configured to move between a deployed position and a retracted position;
a retraction mechanism (110) operatively connected to the retractable barrier within the barrier housing configured to bias the retractable barrier to the retracted position; and
a barrier retainer (112) configured to mount to a second surface (114) in the passenger vehicle opposite the first surface to retain the retractable barrier in the deployed position.

2. The system as recited in claim 1, wherein the first surface (104) is an overhead compartment of a passenger service unit, and wherein the second surface (114) is an arm rest between respective passenger service units configured to provide a barrier between the respective passenger service units.

3. The system as recited in claim 2, wherein the barrier housing (102) further includes a reading light (128) and a switch (130) to activate the reading light.

4. The system as recited in claim 1, wherein the first surface (104) is an arm rest between respective passenger service units and wherein the second surface (114) is overhead compartment of a passenger service unit configured to provide a barrier between the respective passenger service units; or wherein the first surface is an overhead compartment of a passenger service unit, and wherein the second surface is a seat back of a forward facing seat configured to provide a barrier between passenger rows; or wherein the first surface is an arm rest between respective passenger service units and wherein the second surface is a seat back of a forward facing seat configured to provide a barrier between the respective passenger service units; or wherein the first surface is a seat back of a forward facing seat and wherein the second surface is an arm rest between respective passenger service units configured to provide a barrier between the respective passenger service units.

5. The system as recited in claim 1, wherein the barrier housing (102) is integral with the first surface, and wherein the barrier retainer is integral with the second surface.

6. The system as recited in any preceding claim, wherein the retractable barrier (106) is of a material configured to be torn in an emergency event, and/or of a material configured to be sanitized with chemical cleaners.

7. The system as recited in any preceding claim, wherein the barrier retainer includes at least one of a magnetic retainer, a spring-loaded retainer, a clip retainer, a knob retainer, a recess retainer, and/or a lever retainer.

8. The system as recited in claim 7, wherein the retractable barrier further includes a free end (108) configured to be pulled by a user and shaped to mate with the barrier retainer.

9. A passenger vehicle, comprising:
a plurality of passenger service units (12) arranged in rows (14) along an aisle (16) of the passenger vehicle (10); and
one or more systems (100) for preventing spread of contagion, as claimed in any preceding claim, mounted between each passenger unit.

10. The passenger vehicle as recited in claim 9, further comprising an overhead compartment on a ceiling of the passenger vehicle, wherein the first surface is the overhead compartment of a passenger service unit; and/or further comprising a plurality of armrests, arranged between each passenger service unit, wherein the second surface is the respective arm rest between respective passenger service units; or further comprising:
an overhead compartment, wherein the barrier housing is integral with the overhead compartment; and
a plurality of armrests, arranged between each passenger service unit, wherein the barrier retainer is integral with a respective arm rest.

11. The passenger vehicle as recited in claim 9 or 10, wherein the passenger vehicle includes an aircraft, a bus, or a train.

12. A method for reducing spread of contagion in a passenger vehicle, comprising:
installing one or more systems (100) as claimed in any of claims 1 to 8 for preventing spread of contagion between one or more passenger units.

13. The method as recited in claim 12, wherein installing includes retrofitting an existing passenger vehicle with the one or more systems for preventing spread of contagion.

14. The method as recited in claim 13, wherein installing includes manufacturing the passenger vehicle to include the one or more systems for preventing spread of contagion integral with passenger service unit architecture.
